# EUROPEAN PATENT APPLICATION

(11) **EP 2 894 128 A1**
(43) Date of publication of application: **15.07.2015**
(21) Application number: 12884339.8
(22) Date of filing: 05.09.2012
(51) Int. Cl.: C01B 31/08

(54) **POROUS CARBON AND METHOD FOR PRODUCING SAME**

(71) Applicant: Toyo Tanso Co., Ltd., Osaka-shi, Osaka 555-0011 (JP)
(72) Inventor: MORISHITA, Takahiro, Osaka-shi Osaka 555-0011 (JP); ORIKASA, Hironori, Osaka-shi Osaka 555-0011 (JP)
(74) Representative: Glawe, Delfs, Moll
(86) International application number: PCT/JP2012/072548
(87) International publication number: WO 2014/038005

(57) **Abstract**

A porous carbon and a method of manufacturing the same are provided, that can remarkably improve the performance by increasing the BET specific surface area even when it contains boron.

A porous carbon is characterized by having a C-B-O bonding structure existing in at least a surface thereof and having a BET specific surface area of 300 m²/g or greater as determined from a nitrogen adsorption isotherm at 77K. The porous carbon can be manufactured by a method including the steps of: mixing a boric acid and a magnesium citrate together, to prepare a mixture; heat-treating the mixture in a vacuum atmosphere, a non-oxidizing atmosphere, or a reducing atmosphere, to prepare a heat-treated substance; and removing a template from the heat-treated substance.

## Description

### TECHNICAL FIELD

The present invention relates to a porous carbon and a method of manufacturing the same. More particularly, the invention relates to a boron-containing porous carbon, which is inexpensive and safe and shows unique characteristics, and a method of manufacturing the same.

### BACKGROUND ART

In recent years, generation and leakage of electromagnetic waves from electronic appliances have become a problem as the integration density of electronic circuits and the frequency of electric signals have become higher and higher. In order to suppress the electromagnetic waves, the technique of covering an electronic device with an electromagnetic wave absorber made of a mixture of a carbon material containing boron with resin, rubber, or the like has been adopted. A carbon material is also used as an electrode material for non-aqueous electrolyte secondary batteries and capacitors. In this case, the wettability of the carbon material to the electrolyte solution can be improved by adding boron to the carbon material. Such carbon materials containing boron include ones disclosed in the following proposals.

A cellulose-based material containing boron is made into a sheet and finally graphitized by baking the material at 2,000°C or higher. It is disclosed that by doing so, a porous carbon containing boron at 50 to 2,000 ppm can be obtained (see Patent Literature 1 below).

However, it is believed that the carbon material fabricated in this way has pores with diameters of several ten micrometers and contains almost no micropores, as described in the publication. In addition, although the publication does not mention the content of boron and the specific surface area, it is believed that the resulting carbon material has a very small specific surface area.

A carbon black in which the amount of boron contained in solid solution is 0.7 weight % to 1.8 weight % has also been proposed (see Patent Literature 2 below). In addition, a carbon black in which the amount of boron contained in solid solution is 0.5 weight % or greater and the amount of soluble boron is 0.05 weight % or less has also been proposed (see Patent Literature 3 below).

Although the BET specific surface area is not clearly shown in these proposals, the BET specific surface area of carbon black is generally lower than 300 m²/g at most. Therefore, it is believed that the porous carbons obtained by the just-described proposals also have a BET specific surface area of less than 300 m²/g. Thus, the carbon blacks fabricated in the above-described manners do not result in high performance porous carbon.

### CITATION LIST

### Patent Literature

[Patent Literature 1] JP H10(1998)-237683 A
[Patent Literature 2] JP 2006-111791 A
[Patent Literature 3] JP 2006-265374 A

### SUMMARY OF INVENTION

### TECHNICAL PROBLEM

In view of the foregoing, it is an object of the present invention to provide a porous carbon that can remarkably improve the performance by increasing the BET specific surface area even when it contains boron. It is also an object of the invention to provide a method of manufacturing such a porous carbon.

### SOLUTION TO PROBLEM

In order to accomplish the foregoing and other objects, the present invention provides a porous carbon characterized by having a C-B-O bonding structure existing in at least a surface thereof, and having a BET specific surface area of 300 m²/g or higher as determined from a nitrogen adsorption isotherm at 77K.

The carbon blacks disclosed in the cited publications have very few micropores or mesopores. For this reason, with those carbon blacks, it has been impossible to obtain a porous carbon having a large BET specific surface area. In contrast, the porous carbon having the just-described configuration has mesopores and micropores produced around the mesopores, and therefore makes it possible to obtain such a porous carbon that can have a BET specific surface area as large as 300 m²/g or greater.

Moreover, because the bond exists in the surface of the porous carbon as in the just-described configuration, hydrophilicity and affinity with an electrolyte solution can improve. In addition, in the porous carbon of the present invention, boron is chemically bonded to carbon and is stably retained in the surface of carbon (i.e., it is not merely carried in the carbon). Therefore, it is possible to prevent boron from coming off from the porous carbon. As a result, the effect of improving the hydrophilicity and the affinity with electrolyte solution can be continued for a long period of time (i.e., the durability is increased).

For the reasons described above, when the porous carbon of the present invention is used as an electrode material, for example, the electrolyte solution and the electrolyte dissolved in the electrolyte solution can be migrated into the pores smoothly in the battery or the capacitor. Therefore, the charge-discharge characteristics of the battery or the capacitor can be improved. On the other hand, when the porous carbon of the present invention is used as an adsorbent agent, the adsorption performance can be remarkably improved.

Herein, it is sufficient that the porous carbon of the present invention have a C-B-O bonding structure in the surface of the porous carbon, and it does not matter whether or not boron exists inside the porous carbon.

In addition, although the upper limit of the BET specific surface area is not limited, it is desirable that the upper limit of the BET specific surface area be 1,500 m²/g or less, because the shape of the carbon wall cannot be maintained and the particles may be broken when the BET specific surface area becomes excessively large.

In the present specification, the pores having a pore diameter of less than 2 nm are referred to as "micropores," the pores having a pore diameter of from 2 nm to 50 nm are referred to as "mesopores," and the pores having a pore diameter of greater than 50 nm are referred to as "macropores."

It is desirable that the micropore volume as determined by a DR method from the nitrogen adsorption isotherm at 77k be 0.3 mL/g or greater. It is also desirable that the difference between the total pore volume determined from the nitrogen adsorption isotherm at 77K and the micropore volume determined by a DR method from the nitrogen adsorption isotherm at 77k (the value is defined as the volume of mesopores) be 1 mL/g or greater.

When the volume of micropores and the volume of mesopores are large, the above-described advantageous effects can be exhibited more significantly.

It is desirable that the content of boron be from 100 ppm to 10,000 ppm (in weight proportion).

When the boron concentration is high as described above, the performance of the porous carbon when used as an electromagnetic wave absorbing agent can be remarkably improved.

It is desirable that the porous carbon have a transmittance of 80% or lower, as determined by using a light ray having a wavelength of 550 nm after adding 0.03 weight % of the porous carbon to 100 g of ion exchange water, applying an ultrasonic wave of 40 kHz thereto for 3 minutes, and further allowing the ion exchange water containing the porous carbon to stand for 16 hours.

When the porous carbon shows such desirable hydrophilicity, the above-described advantageous effects can be exhibited more significantly.

In order to accomplish the foregoing and other objects, the present invention also provides a method of manufacturing a porous carbon, characterized by comprising the steps of: mixing a boric acid and a magnesium citrate together, to prepare a mixture; heat-treating the mixture in a vacuum atmosphere, a non-oxidizing atmosphere, or a reducing atmosphere, to prepare a heat-treated substance; and removing a template from the heat-treated substance.

When a mixture of boric acid and magnesium citrate is heat-treated in a predetermined atmosphere, the magnesium citrate is decomposed firstly to generate magnesium oxide and magnesium citrate, and a boron oxide produced from the boric acid is melted. Next, when the mixture is further heated, the reaction product of the magnesium oxide and the boron oxide is formed at the outer periphery of the magnesium oxide, so that a template is formed by the reaction product and the magnesium oxide. Also, carbon is arranged around the template. Thereafter, by removing the template, the porous carbon described above can be obtained.

Here, the introducing mechanism of elemental boron into carbon may include (1) the case in which the elemental boron is introduced in the surface of the carbon through the reaction between the magnesium oxide and the boron oxide, and (2) the case in which the elemental boron is introduced by directly reacting the melted boron oxide with carbon or a carbon precursor. Such mechanisms make it possible to obtain the advantageous effects that boron can be selectively introduced in the surface of the mesopores and that boron can be introduced uniformly. In particular, it is believed that when the mechanism (1) works mainly, the selective introduction of boron into the mesopore surface is performed sufficiently, while when the mechanism (2) works mainly, the uniform introduction of boron is performed sufficiently.

It should be noted that boric acid, not metallic boron, is used as the boron source. The reason is as follows. That is, boric acid is less costly and easily available, and also, it can be easily removed because it is soluble with water or an acid. In addition, boric acid is in solid state (powder) at room temperature, but it turns into a boron oxide in a melted state. Therefore, the flowability improves, and it spreads throughout the entire material. Therefore, in the introduction of the elemental boron described in (1) and (2) above, a uniform reaction takes place, so the elemental boron is more likely to be introduced into the porous carbon uniformly. On the other hand, metallic boron has a high melting point (2,076°C) and exists in a solid state, that is, in the form of large-sized particles. For this reason, the reaction takes place only at the interface between the metallic boron particles and carbon (or a carbon precursor), so boron is introduced only in a non-uniform fashion even if the reaction takes place.

It should be noted, however, that the boron source is not limited to boric acid but may be other boron compounds such as boron oxides.

It is desirable that the proportion of the boric acid to the magnesium citrate be restricted to from greater than 0 weight % to 100 weight %.

It is sufficient that the above-mentioned proportion exceed 0 weight % because the advantageous effects of the present invention can be obtained as long as the boric acid is contained even in a very small amount. On the other hand, when the boron content becomes excessively large, the micropore volume decreases. For this reason, it is desirable that the above-mentioned proportion be restricted to 100 weight % or lower. It should be noted that, in order to sufficiently obtain the advantageous effects of the present invention and at the same time to sufficiently prevent the decrease of micropore volume, it is more desirable that the above-mentioned amount be from 1 weight % to 50 weight %.

It is desirable that the temperature in the heat-treating be from 500°C to 1,500°C.

The reason is as follows. When the temperature is less than 500°C, the carbonization may be insufficient and the pores may not develop sufficiently. On the other hand, at a temperature of higher than 1,500°C, the oxide serving as the template for pores (such as magnesium oxide) is sintered and made into a large size. Therefore, the pore size becomes large and the specific surface area becomes small. In addition, when the temperature exceeds 1,500°C, the surface functional groups having the C-B-O bond are decomposed. Furthermore, boron carbide (B₄C) precipitates.

### ADVANTAGEOUS EFFECTS OF INVENTION

The present invention achieves significant advantageous effects that the BET specific surface area can be increased even when boron is contained, and thereby the performance of the porous carbon can be remarkably improved.

### BRIEF DESCRIPTION OF DRAWINGS

[Fig. 1] Fig. 1 is a schematic view illustrating manufacturing steps of a present invention carbon.
[Fig. 2] Fig. 2 is a graph illustrating the results of X-ray diffraction analysis of the carbon materials for present invention carbons A1 and A3 as well as a comparative carbon Z1 at a manufacturing stage (more specifically, the carbon materials that have not yet washed with a sulfuric acid solution).
[Fig. 3] Fig. 3 is a graph illustrating the results of X-ray diffraction analysis for the present invention carbons A1 to A3 and the comparative carbon Z1.
[Fig. 4] Fig. 4 is a graph illustrating the results of X-ray diffraction analysis for a comparative carbon Z2.
[Fig. 5] Fig. 5 is a TEM (transmission electron microscope) photograph of the present invention carbon A1.
[Fig. 6] Fig. 6 is a TEM photograph of the present invention carbon A3.
[Fig. 7] Fig. 7 is a TEM photograph of the comparative carbon Z1.
[Fig. 8] Fig. 8 is a SEM (scanning electron microscope) photograph of the present invention carbon A3.
[Fig. 9] Fig. 9 is a graph illustrating the results of XPS (X-ray photoelectron spectroscopy) for the present invention carbon A3.
[Fig. 10] Fig. 10 is a graph illustrating the results of XPS for the comparative carbon Z1.
[Fig. 11] Fig. 11 is a graph illustrating nitrogen adsorption isotherms of the present invention carbons A1 to A3 and the comparative carbon Z1.
[Fig. 12] Fig. 12 is a graph illustrating nitrogen adsorption isotherms of the comparative carbons Z1 and Z2.
[Fig. 13] Fig. 13 is a graph illustrating pore size distribution of mesopore in the present invention carbons A1 to A3 and the comparative carbon Z1.

### DESCRIPTION OF EMBODIMENTS

Hereinbelow, embodiments of the present invention will be described.

### (1) FIRST EMBODIMENT

A carbonized substance of the present invention is fabricated in the following manner. An organic acid that serves as both a template source and a carbon source (such as magnesium citrate, magnesium oxalate, calcium citrate, or calcium oxalate) is wet-blended or dry-blended with boric acid serving as a boron source in solution state or powder state. The mixture is carbonized under a non-oxidizing atmosphere, a reduced pressure [133 Pa (1 torr) or less], or a reducing atmosphere at a temperature of from 500°C to 1,500°C. The resulting carbide is washed to remove the template. Through these steps, the carbonized substance of the present invention can be fabricated. Such manufacturing method makes it possible to form mesopores directly using the template and at the same time introduce elemental boron into at least the surface of the porous carbon.

More specifically, the just-described porous carbon has a C-B-O bonding structure existing in at least a surface thereof and has a BET specific surface area of 300 m²/g or higher as determined from nitrogen adsorption isotherm at 77K. The resulting porous carbon shows low chemical reactivity with acid or alkali, and has extremely good electrical conductivity.

It should be noted that although the boron is introduced in at least the surface of the porous carbon (at least the surface of the mesopores), this is merely illustrative, and the boron may also be introduced in the surfaces of micropores and macropores, and into the carbon skeleton of the porous carbon.

In order to adjust the proportion of template and carbon, it is desirable to adjust the proportion of the organic acid serving as both the template source and the carbon source and the resin or the like shown in the following second embodiment.

It is desirable that, when removing the template, the remaining ratio of the template after the removing be restricted to 0.5% or less. The reason is that when the remaining ratio of the template after the removing exceeds 0.5%, the region that cannot serve the role of the pores forms in a wide area because the amount of the template remaining in the mesopores is large. As the cleaning solution for removing the oxide, it is preferable to use a dilute acid of 2 mol/L or lower of a common inorganic acid, such as hydrochloric acid, sulfuric acid, nitric acid, citric acid, acetic acid, and formic acid. Furthermore, it is also possible to use hot water of 80°C or higher.

### (2) SECOND EMBODIMENT

The carbonized substance of the present invention can also be obtained in the following manner. A polyimide containing at least one nitrogen or fluorine atom in its unit structure or a resin having a carbon yield of higher than 40 weight %, for example, a thermoplastic resin such as a phenolic resin (polyvinyl alcohol) or a pitch, a template, and a boric acid serving as a boron source are wet-blended or dry-blended in a solution or powder state, as in a similar manner to that described above. The mixture is then carbonized under a non-oxidizing atmosphere, a reduced pressure, or a reducing atmosphere at a temperature of from 500°C to 1,500°C. Then, the resultant carbide is subjected to a washing treatment. Such a manufacturing method makes it possible to manufacture a porous carbon having a C-B-O bonding structure existing in at least a surface thereof and having a BET specific surface area of 300 m²/g or greater as determined from a nitrogen adsorption isotherm at 77K, as in the foregoing first embodiment.

Here, the polyimide containing at least one nitrogen or fluorine atom in its unit structure can be obtained by polycondensation of an acid component and a diamine component. However, in this case, it is necessary that either one of or both of the acid component and the diamine component contain at least one nitrogen atom or fluorine atom.

Specifically, a polyamic acid, which is the precursor of the polyimide, is deposited, and the solvent is removed by heating, to obtain a polyamic acid film. Next, the obtained polyamic acid film is subjected to heat imidization at 200°C or higher, so that the polyimide can be fabricated.

Examples of the diamine component include: aromatic diamines including: 2,2-Bis(4-aminophenyl)hexafluoropropane, 2,2'-Bis(trifluoromethyl)-benzidine, and 4,4'-diaminooctafluorobiphenyl; and 3,3'-difluoro-4,4'-diaminodiphenylmethane, 3,3'-difluoro-4,4'-diaminodiphenylether, 3,3'-di(trifluoromethyl)-4,4'-diaminodiphenylether, 3,3'-difluoro-4,4'-diaminodiphenylpropane, 3,3'-difluoro-4,4'-diaminodiphenylhexafluoropropane, 3,3'-difluoro-4,4'-diaminobenzophenone, 3,3',5,5'-tetrafluoro-4,4'-diaminodiphenylmethane, 3,3',5,5'-tetra(trifluoromethyl)-4,4'-diaminodiphenylmethane, 3,3',5,5' -tetrafluoro-4,4' -diaminodiphenylpropane, 3,3',5,5'-tetra(trifluoromethyl)-4,4'-diaminodiphenylpropane, 3,3',5,5'-tetrafluoro-4,4-diaminodiphenylhexafluoropropane, 1,3-diamino-5-(perfluorononenyloxy)benzene, 1,3-diamino-4-methyl-5-(perfluorononenyloxy)benzene, 1,3-diamino-4-methoxy-5-(perfluorononenyloxy)benzene, 1,3-diamino-2,4,6-trifluoro-5-(perfluorononenyloxy)benzene, 1,3-diamino-4-chloro-5-(perfluorononenyloxy)benzene, 1,3-diamino-4-pbromo-5-(perfluorononenyloxy)benzene, 1,2-diamino-4-(perfluorononenyloxy)benzene, 1,2-diamino-4-methyl-5-(perfluorononenyloxy)benzene, 1,2-diamino-4-methoxy-5-(perfluorononenyloxy)benzene, 1,2-diamino-3,4,6-trifluoro-5-(perfluorononenyloxy)benzene, 1,2-diamino-4-chloro5-(perfluorononenyloxy)benzene, 1,2-diamino-4-bromo-5-(perfluorononenyloxy)benzene, 1,4-diamino-3-(perfluorononenyloxy)benzene, 1,4-diamino-2-methyl-5-(perfluorononenyloxy)benzene, 1,4-diamino-2-methoxy-5-(perfluorononenyloxy)benzene, 1,4-diamino-2,3,6-trifluoro-5-(perfluorononenyloxy)benzene, 1,4-diamino-2-chloro-5-(perfluorononenyloxy)benzene, 1,4-diamino-2-pbromo-5-(perfluorononenyloxy)benzene, 1,3-diamino-5-(perfluorohexenyloxy)benzene, 1,3-diamino-4-methyl-5-(perfluorohexenyloxy)benzene, 1,3-diamino-4-methoxy-5-(perfluorohexenyloxy)benzene, 1,3-diamino-2,4,6-trifluoro-5-(perfluorohexenyloxy)benzene, 1,3-diamino-4-chloro-5-(perfluorohexenyloxy)benzene, 1,3-diamino-4-bromo-5-(perfluorohexenyloxy)benzene, 1,2-diamino-4-(perfluorohexenyloxy)benzene, 1,2-diamino-4-methyl-5-(perfluorohexenyloxy)benzene, 1,2-diamino-4-methoxy-5-(perfluorohexenyloxy)benzene, 1,2-diamino-3,4,6-trifluoro-5-(perfluorohexenyloxy)benzene, 1,2-diamino-4-chloro-5-(perfluorohexenyloxy)benzene, 1,2-diamino-4-bromo-5-(perfluorohexenyloxy)benzene, 1,4-diamino-3 -(perfluorohexenyloxy)benzene, 1,4-diamino-2-methyl-5-(perfluorohexenyloxy)benzene, 1,4-diamino-2-methoxy-5-(perfluorohexenyloxy)benzene, 1,4-diamino-2,3,6-trifluoro-5-(perfluorohexenyloxy)benzene, 1,4-diamino-2-chloro-5-(perfluorohexenyloxy)benzene, 1,4-diamino-2-bromo-5-(perfluorohexenyloxy)benzene; and p-phenylenediamine (PPD) and dioxydianiline, which do not contain fluorine atoms. It is also possible that two or more of the foregoing aromatic diamines may be used in combination as the diamine component.

Examples of the acid component include: 4,4'-(hexafluoroisopropylidene)diphthalic anhydride (6FDA), which contains fluorine atoms; and 3,4,3',4'-biphenyltetracarboxylic dianhydride (BPDA) and pyromellitic dianhydride (PMDA), which contains no fluorine atom.

Examples of the organic solvent used as the solvent for the polyimide precursor include N-methyl-2-pyrrolidone and dimethylformamide.

The technique for imidization may follow either heat imidization or chemical imidization, as indicated by known methods [for example, see "Shin Kobunshi Jikkengaku, Vol. 3, Kobunshi no Gosei·Hanno (2)" (Experimental Polymer Science, New Edition, Vol. 3, Synthesis and reaction of polymers [2]), edited by Society of Polymer Science, Japan, Kyoritsu Shuppan, Tokyo, March 28, 1996, p. 158]. These methods of imidization do not limit the present invention.

Furthermore, it is possible to use a resin having a carbon yield of 40 weight % or higher, such as petroleum-based tar pitch and an acrylic resin, other than the polyimide.

Here, it is necessary that the carbon yield of the carbon source be 40 weight % or higher, and particularly, it is preferable that the carbon yield be from 40 weight % to 85 weight %. The reason is as follows. If the carbon yield is excessively small or excessively large (more specifically, if the carbon yield of the flowable material is less than 40 weight % or greater than 85 weight %), carbon powder in which the three-dimensional network structure cannot be retained may be produced. In contrast, by using a carbon source having a carbon yield of from 40% to 85%, it is possible to reliably obtain a porous carbon having a three-dimensional network structure in which continuous pores are formed in the locations where the template has existed after removing the template. In addition, when the carbon yield of the flowable material is within the foregoing range, the micropores develop greatly, so the specific surface area becomes large.

It is desirable that an alkaline-earth metal compound, such as magnesium oxide and calcium oxide, be used as the template. The reason is as follows. The alkaline-earth metal compound can be removed by a weak acid or hot water (that is, the template can be removed without using a strong acid), and therefore, the properties of the porous carbon itself can be prevented from changing in the step of removing the template. Moreover, the alkaline-earth metal compound is unlikely to be reduced and turned into a metal even in a high temperature range such as in a carbonization process. It is preferable that the proportion of the template with respect to the carbon source be restricted to from 10 weight % to 90 weight %.

The diameter of the pores, the pore distribution of the porous carbon, and the thickness of the carbonaceous wall can be adjusted by varying the diameter of the template and/or the type of the organic resin. Therefore, by appropriately selecting the diameter of the template and the type of the organic resin, it also becomes possible to fabricate a porous carbon having more uniform pore diameters and a greater pore volume.

### EXAMPLES

### (Example 1)

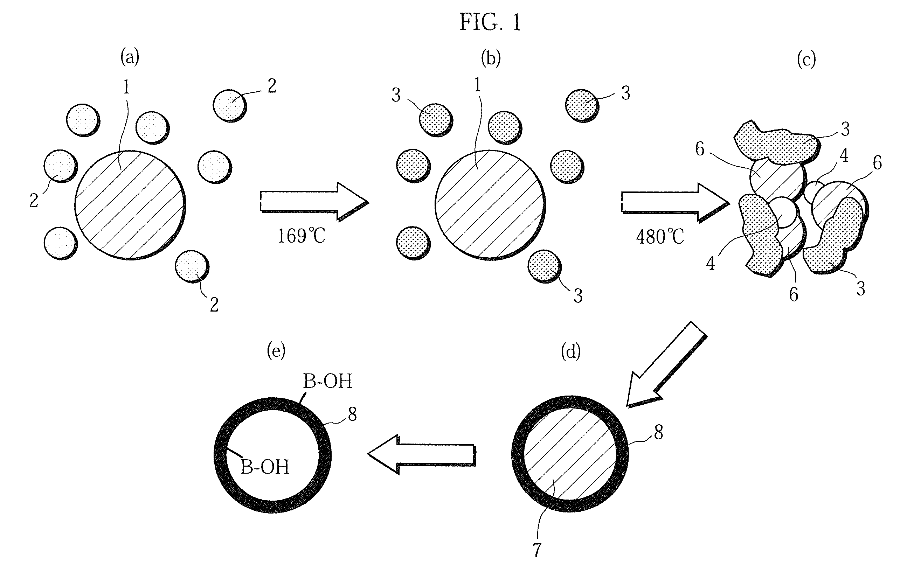

First, magnesium citrate (monohydrate) serving as both a template source and a carbon source and boric acid (H₃BO₃, which is in powder solid form at room temperature) were prepared and mixed in a mortar so that the proportion of the boric acid with respect to the magnesium citrate became 4 weight %, to obtain a mixture of magnesium citrate 1 and boric acid 2 as illustrated in Fig. 1(a). Next, the mixture was heated to 900°C at a temperature elevation rate of 10°C/minute, and was kept at 900°C for 1 hour. Thereafter, the resultant carbon was washed with a dilute sulfuric acid solution added at a concentration of 1 mol/L, to dissolve away the magnesium oxide (MgO) and the reaction product of the magnesium oxide and the boron oxide almost completely. Lastly, the resultant material was washed with water, and thereby a porous carbon having a C-B-O bonding structure existing in at least a surface thereof was obtained.

Here, in the above-described heat treatment process, when the mixture is heated to 169°C, the boric acid 2 is decomposed into a boron oxide 3, as illustrated in Fig. 1 (b). When the mixture is further heated to 480°C, the magnesium citrate 1 is decomposed to produce magnesium oxide 4 and magnesium citrate 6 that is being decomposed, and the boron oxide 3 is melted. Thereafter, when the mixture is further heated, the reaction product of the magnesium oxide and the boron oxide is formed at the outer periphery of the magnesium oxide, so that a template 7 is formed by the reaction product and the magnesium oxide, as illustrated in Fig. 1(d). Also, carbon 8 produced by carbonization of the citric acid component is arranged around the template 7. Lastly, the resultant material was washed with water to remove the template 7, and thereby a porous carbon 8 having a C-B-O bonding structure existing in at least the surface thereof can be obtained, as illustrated in Fig. 1(e).

The porous carbon fabricated in this manner is hereinafter referred to as a present invention carbon A1.

### (Example 2)

A porous carbon was fabricated in the same manner as described in Example 1 above, except that the amount of the boric acid with respect to the magnesium citrate was set at 20 weight %.

The porous carbon fabricated in this manner is hereinafter referred to as a present invention carbon A2.

### (Example 3)

A porous carbon was fabricated in the same manner as described in Example 1 above, except that the amount of the boric acid with respect to the magnesium citrate was set at 50 weight %.

The porous carbon fabricated in this manner is hereinafter referred to as a present invention carbon A3.

### (Comparative Example 1)

A porous carbon was fabricated in the same manner as described in Example 1 above, except that no boric acid was added.

The porous carbon fabricated in this manner is hereinafter referred to as a comparative carbon Z1.

### (Comparative Example 2)

A porous carbon was fabricated in the same manner as described in Example 1 above, except that metallic boron was used in place of the boric acid, and that the amount of the metallic boron with respect to the magnesium citrate was set at 5 weight %.

The porous carbon fabricated in this manner is hereinafter referred to as a comparative carbon Z2.

### (Experiment 1)

The yield of magnesium oxide and the yield of carbon were investigated for the present invention carbons A1 and A3 as well as the comparative carbon Z1. The results are shown in Table1 below.

**TABLE 1**

| Material | Amount of boric acid to magnesium citrate (weight %) | Yield of magnesium oxide (weight %) | Yield of carbon (weight %) |
|---|---|---|---|
| A1 | 4 | 24.9 | 6.6 |
| A2 | 20 | 21.5 | 5.8 |
| A3 | 50 | 17.2 | 4.6 |
| Z1 | 0 | 25.8 | 6.9 |

As clearly seen from Table 1, as the proportion of the added boric acid becomes higher, the yield of magnesium oxide and the yield of carbon become lower. The reason is that when the amount of the added boric acid increases, the amount of the magnesium citrate (which serves as the magnesium oxide source and the carbon source) decreases correspondingly.

### (Experiment 2)

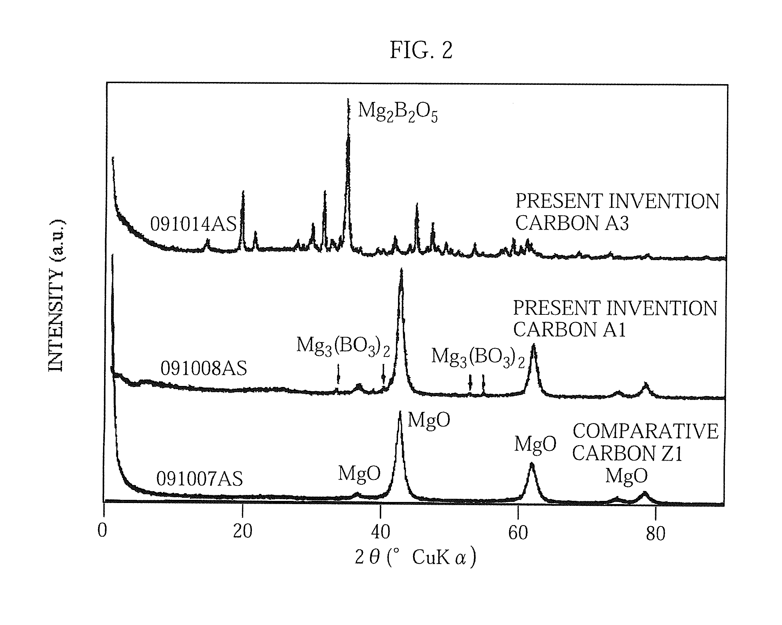

An X-ray diffraction analysis was conducted for the carbon materials at a manufacturing stage of the present invention carbons A1 and A3 as well as the comparative carbon Z1 (more specifically, the carbon materials that have not yet washed with a sulfuric acid solution). The results are shown in Fig. 2.

As clearly seen from Fig. 2, only the peaks originating from magnesium oxide are observed in the carbon material at the production stage of the comparative carbon Z1. In contrast, in the carbon material at the production stage of the present invention carbon A1, the peaks originating from Mg₃(BO₃)₂ can be observed, in addition to the peaks originating from magnesium oxide. Furthermore, in the carbon material at the production stage of the present invention carbon A3, almost no peak originating from magnesium oxide is observed, and the peaks originating from Mg₃(BO₃)₂ and the peaks originating from Mg₂B₂O₅ can be observed. This demonstrates that the boric acid reacts with the magnesium oxide, which is originally the template.

More specifically, it is believed that the results are due to the reactions represented by the following formulae (1) and (2). In the case where the amount of the added boric acid is small, the reaction represented by the formula (1) takes place. In the case where the amount of the added boric acid is large, the reaction represented by the formula (2) takes place in addition to the reaction represented by the formula (1). In the case of the carbon material at the manufacturing stage of the present invention carbon A1, the amount of the added boric acid is small, so it is believed that only the reaction represented by the formula (1) takes place. In the case of the carbon material at the manufacturing stage of the present invention carbon A3, the amount of the added boric acid is large, so the reaction represented by the formula (2) takes place in addition to the reaction represented by the formula (1).

3MgO + 2H₃BO₃ → Mg₃(BO₃)₂ + 3H₂O (1)

2Mg₃(BO₃)₂ + 2H₃BO₃ → 3Mg₂B₂O₅ + 3H₂O (2)

### (Experiment 3)

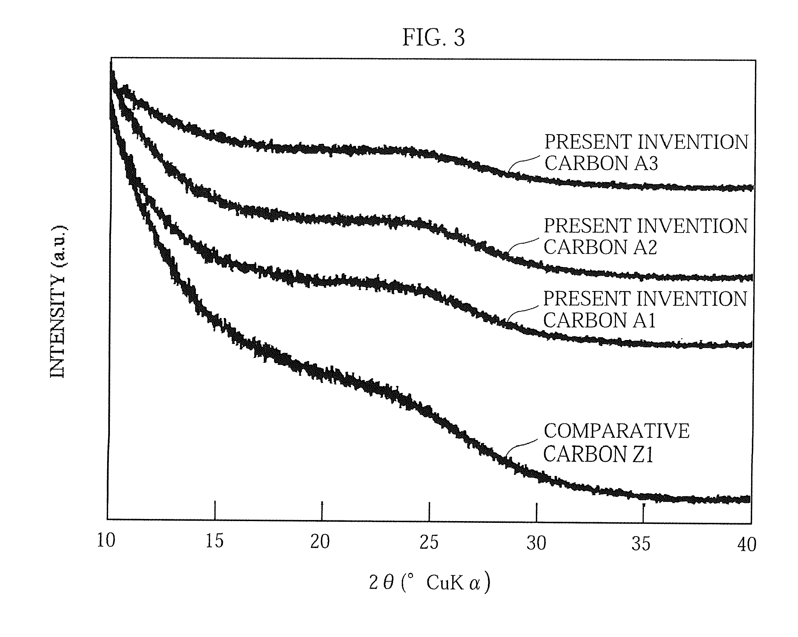

An X-ray diffraction analysis was performed for each of the present invention carbons A1 to A3 and the comparative carbon Z1. The results are shown in Fig. 3.

As clearly seen from Fig. 3, no significant change was observed in the present invention carbons A1 to A3 and the comparative carbon Z1. This indicates that no notable change occurs in crystallinity and the like even when boron is added.

### (Experiment 4)

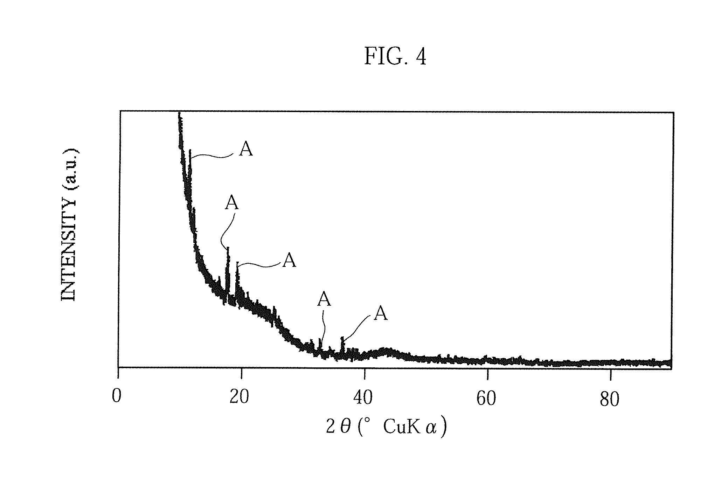

An X-ray diffraction analysis was performed for the comparative carbon Z2. The results are shown in Fig. 4.

As is clearly seen from Fig. 4, it is observed that the metallic boron cannot be removed even when the material is washed with a sulfuric acid solution, and a large amount of metallic boron remains (see the peaks indicated by A in Fig. 4).

### (Experiment 5)

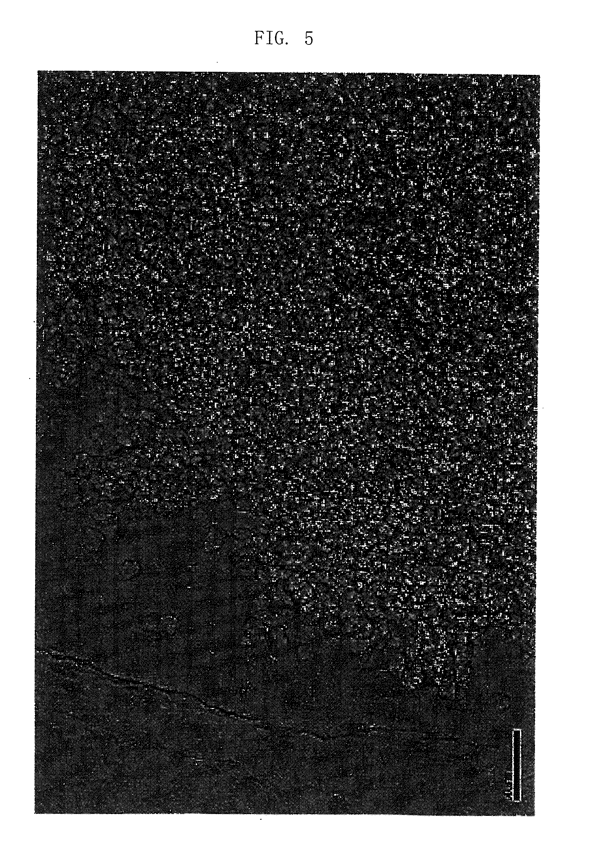

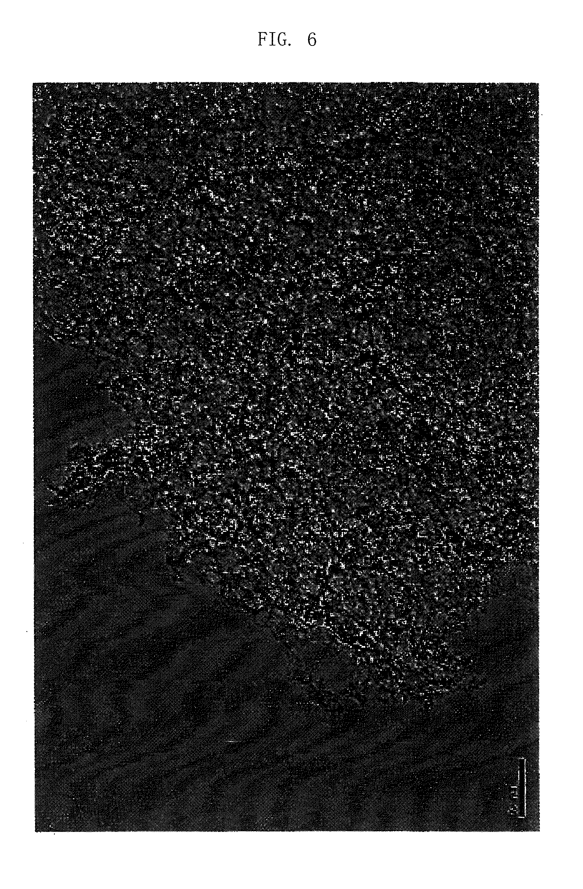

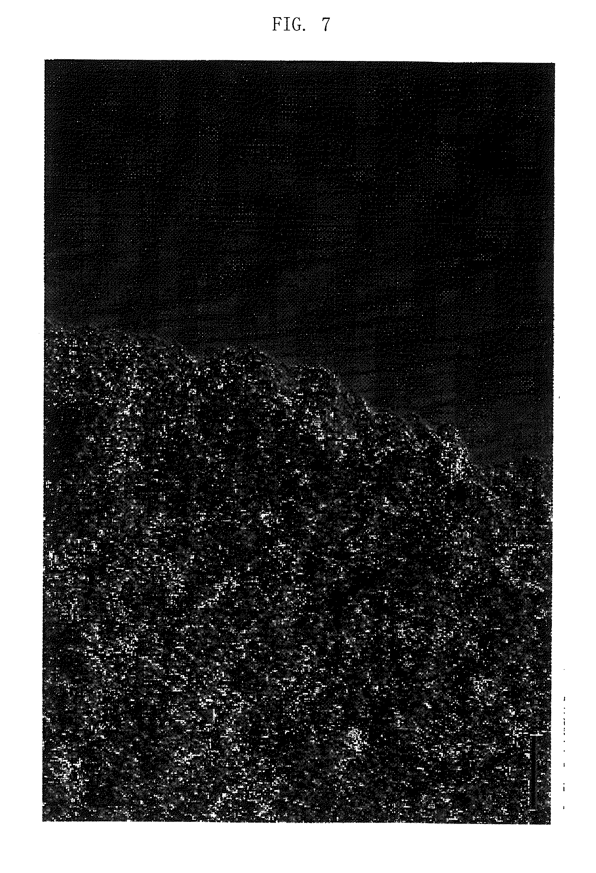

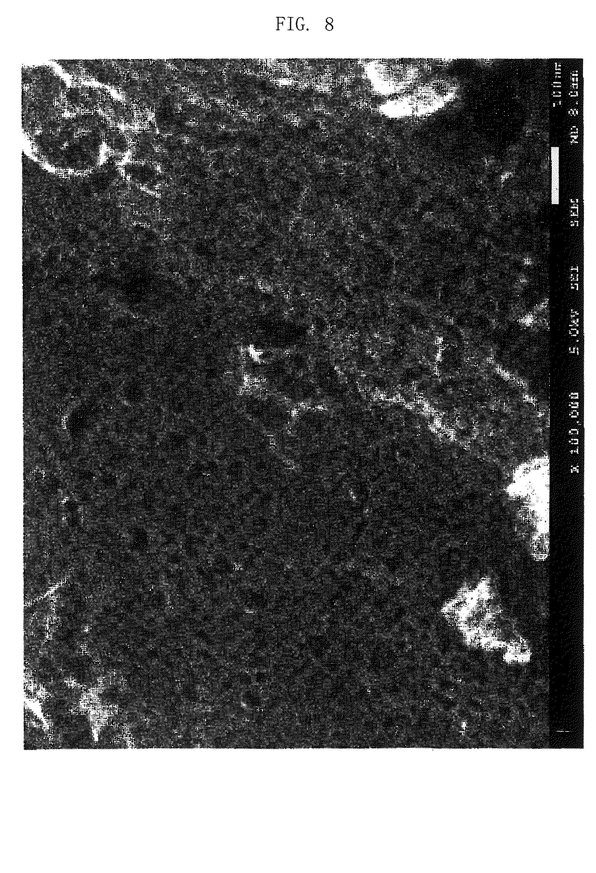

Each of the present invention carbons A1 and A3 as well as the comparative carbon Z1 was observed using a TEM (transmission electron microscope). The results are shown in Figs. 5 to 7 (Fig. 5 is a photograph of the present invention carbon A1, Fig. 6 is a photograph of the present invention carbon A3, and Fig. 7 is a photograph of the comparative carbon Z1). The present invention carbon A3 was also observed using a SEM (scanning electron microscope). The result is shown in Fig. 8.

From Figs. 5 to 7, it is understood that the nanostructure of the resulting carbon changes by varying the amount of the added boric acid. In other words, it is believed that the nanostructure of the carbon can be controlled by the amount of the added boric acid. As discussed with reference to Fig. 1, the mesopores are formed by coating with carbon and thereafter removing the template in the present invention, and the reaction product of magnesium oxide and boric acid is utilized as the template. As described above, in the present invention carbons A1 and A3, the melted boron oxide dissolves with magnesium citrate. As a result, the magnesium oxide that is directly formed from the magnesium citrate and the reaction product that is formed around this magnesium oxide (the reaction product that is formed from the magnesium oxide and the boric acid) serve as the template. On the other hand, in the comparative carbon Z1, which contains no boric acid (i.e., which contains only magnesium citrate), only the magnesium oxide that is directly formed from the magnesium citrate serves as the template. Therefore, the templates in the present invention carbons A1 and A3 are larger than the template in the comparative carbon Z1. As a result, when mesopores were formed by removing the template, it was observed that the present invention carbons A1 and A3 resulted in larger mesopores than the comparative carbon Z1 (this is clear from the comparison of Figs. 5 and 6 with Fig. 7). Moreover, Figs. 5 and 6 clearly show that the particle size of primary particles in the present invention carbons A1 and A3 was about 10 µm. Furthermore, Fig. 8 clearly shows that mesopores noticeably exist in the present invention carbon A3.

### (Experiment 6)

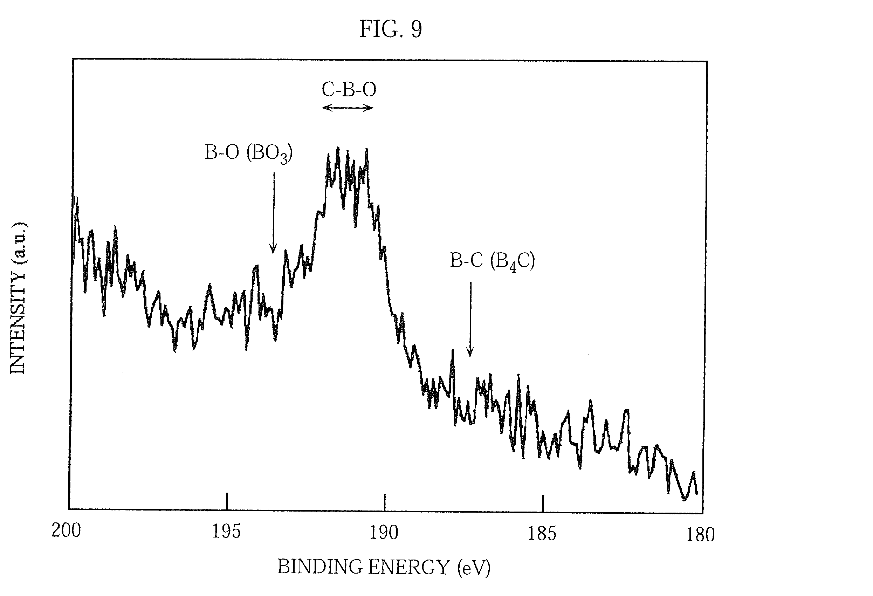

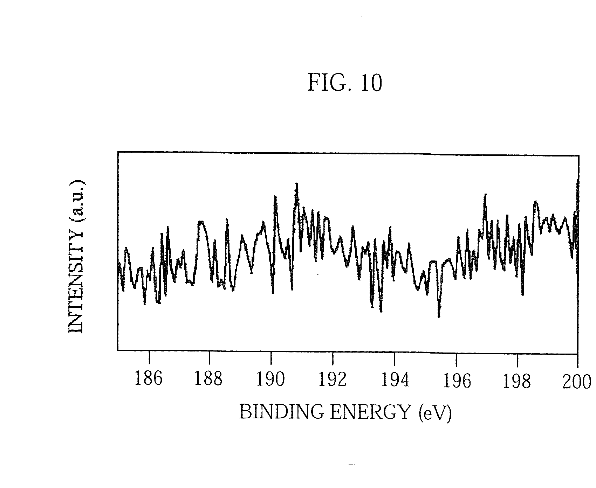

An XPS (X-ray photoelectron spectroscopy) analysis was conducted for the present invention carbon A3. The result is shown in Fig. 9. An XPS analysis was also conducted for the comparative carbon Z1. The result is shown in Fig. 10.

Fig. 9 clearly shows that in the analysis of the surface condition, almost no B-O bond [the bond originating from boron oxide (BO₃)] or B-C bond [the bond originating from boron carbide (B₄C)] is observed, but the peaks originating from the C-B-O bond are observed noticeably. Accordingly, it is understood that the condition of the boron in the surface of the present invention carbon A3 is such that it is not merely adhered, carried, or adsorbed on the surface, or it does not exist in the form of boron oxide or boron carbide, but it exists in the carbon surface in a bonding condition of C-B-O.

On the other hand, Fig. 10 clearly shows that no peak originating from boron was observed in the comparative carbon Z1.

### (Experiment 7)

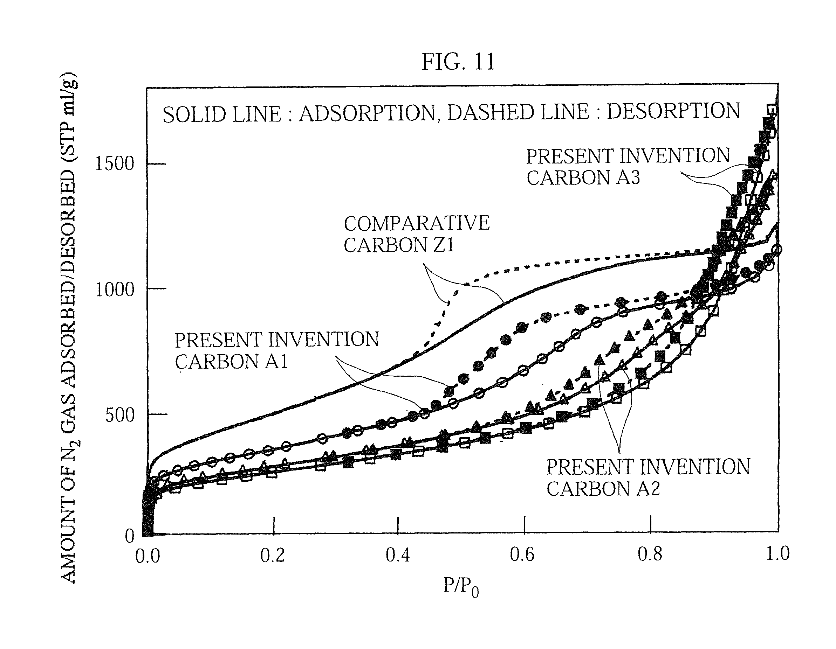

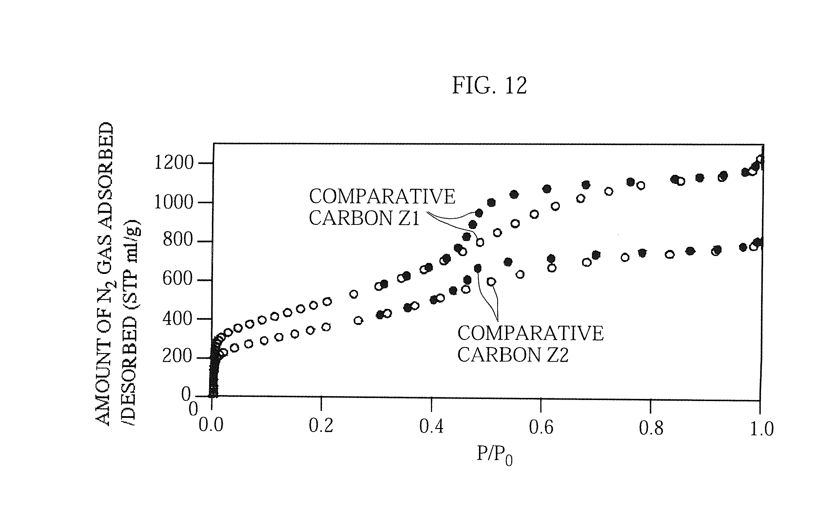

A nitrogen adsorption measurement was carried out at 77K for each of the present invention carbons A1 to A3 and the comparative carbon Z1, and the nitrogen adsorption isotherms were obtained. The results are shown in Fig. 11. In addition, a nitrogen adsorption isotherm of the comparative carbon Z2 was obtained in a like manner. The result is shown in Fig. 12. Fig. 12 also contains a nitrogen adsorption isotherm of the comparative carbon Z1.

Fig. 11 clearly shows that, in a low pressure region, the adsorption isotherms for the present invention carbons A1 to A3 are shifted downward relative to that of the comparative carbon Z1. However, in a high pressure region, the adsorption isotherms for the present invention carbons A1 to A3 are shifted upward. The reason for such a result is that the number of micropores decreased but the number of mesopores, or micropores, which are relatively large, increased in the present invention carbons A1 to A3 relative to that in the comparative carbon Z1.

In addition, Fig. 12 clearly shows that, in all the regions, the adsorption isotherm for the comparative carbon Z2 is shifted downward relative to that of the comparative carbon Z1. This is believed to be due to the following reason. Since the contact area between carbon and metallic boron powder is very small, the reaction between the metallic boron and the carbon is negligible. In addition, the metallic boron has a considerably low solubility with acid, so the unreacted substance could not be removed. Therefore, there is no significant difference in the pore structure between the comparative carbon Z2 and the comparative carbon Z1. As a consequence, it is believed that the adsorption isotherm for the comparative carbon Z2 is shifted downward corresponding to the weight of the boron relative to that for the comparative carbon Z1.

### (Experiment 8)

The boron content (weight percentage) of each of the present invention carbons A1 to A3 and the comparative carbon Z1 was measured using an X-ray fluorescence analyzer. In addition, for each of them, the total pore volume and the BET specific surface area were determined from the nitrogen adsorption isotherm at 77K, and the micropore volume was determined by a DR method from the nitrogen adsorption isotherm at 77k. Furthermore, the mesopore volume was obtained by subtracting the micropore volume from the total pore volume. The results are shown in Table 2 below.

**TABLE 2**

| Carbon | Amount relative to magnesium citrate (weight %) | | Boron content* (ppm) | BET specific surface area (m²/g) | Total pore volume (mL/g) | Micropore volume (mL/g) | Mesopore volume (mL/g) |
|---|---|---|---|---|---|---|---|
| | Boric acid | Metallic boron | | | | | |
| A1 | 4 | - | 220 | 1200 | 1.67 | 0.44 | 1.23 |
| A2 | 20 | - | 1200 | 960 | 2.14 | 0.35 | 1.79 |
| A3 | 50 | - | 5000 | 890 | 2.51 | 0.34 | 2.17 |
| Z1 | 0 | - | 0 | 1710 | 1.83 | 0.61 | 1.22 |
| Z2 | - | 5 | - | 1260 | 1.22 | 0.43 | 0.79 |

| | | | | | | | |
|---|---|---|---|---|---|---|---|
| * Concerning the boron content, the value for the present invention carbon A3 is an actually measured value, and the values for the present invention carbons A1 and A2 as well as the comparative carbon Z1 are estimated values. | | | | | | | |

The results shown in Table 2 clearly indicate that, as the proportion of the boric acid with respect to the magnesium citrate increases, the boron content increases correspondingly, and that, as the boron content increases, the BET specific surface area decreases. However, it is understood that even the present invention carbon A3, which has the highest boron content, has a BET specific surface area of 890 m²/g, which is remarkably greater than that of carbon black.

Moreover, the results in Table 2 clearly indicate that, as the boron content increases, the micropore volume decreases. This is the same tendency as the BET specific surface area. Even the present invention carbon A3, which has the highest boron content, has a micropore volume of 0.34 mL/g. This is such a level of micropore volume that can be called a porous substance.

Furthermore, as clearly seen from the results in Table 2, even the present invention carbon A1, which has the lowest mesopore volume, has a mesopore volume of 1.22 mL/g. This means that the mesopore volume is maintained at a higher level than those of conventional porous carbons, including activated carbons.

### (Experiment 9)

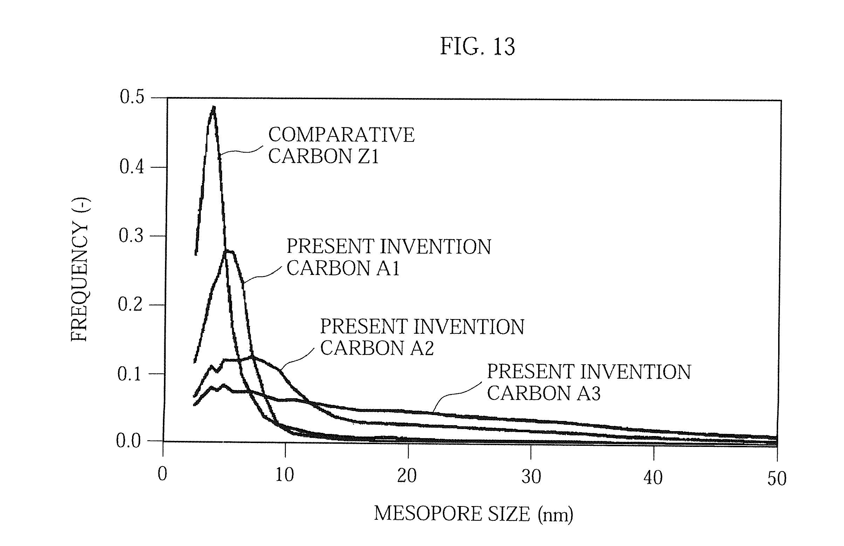

The pore size distributions of the mesopores in the present invention carbons A1 to A3 and the comparative carbon Z1 are shown in Fig. 13.

Fig. 13 clearly demonstrates that as the amount of the added boric acid increases, the proportion of larger-sized mesopores becomes higher. There is a possibility that the volume of the template increased because the magnesium oxide, serving as the template for mesopores, caused a reaction with the boric acid, and consequently, the mesopore volume increased.

### (Experiment 10)

For the present invention carbons A1 to A3 and the comparative carbon Z1, the following experiment was conducted in order to confirm the dispersibility in water. The results are shown in Table 3 below. In the experiment, 0.03 weight % of each of the porous carbons was added to 100 g of ion exchange water, and an ultrasonic wave of 40 kHz was applied thereto for 3 minutes. Thereafter, each of the samples was allowed to stand for 16 hours, and thereafter, the transmittance at a wavelength of 550 nm was measured. The measurement was carried out using a cell having an optical path length of 1 cm in an ultraviolet-visible absorption spectrophotometer.

**TABLE 3**

| Material | Amount of boric acid to magnesium citrate (weight %) | Transmittance (%) |
|---|---|---|
| A1 | 4 | 74 |
| A2 | 20 | 26 |
| A3 | 50 | 19 |
| Z1 | 0 | 87 |

As clearly seen from Table 3, the comparative carbon Z1, in which the boric acid is not added, shows a high transmittance of 87%. In contrast, the present invention carbons A1 to A3 show transmittances of 19% to 74%, which are lower than the transmittance of the comparative carbon Z1. It is believed that the reason is that, in the present invention carbons A1 to A3, the carbon was dispersed in pure water without causing sedimentation and the state of suspension waves was continued to be maintained. Thus, it is understood that the present invention has the advantageous effects of improving the wettability to water and increasing the dispersibility.

### INDUSTRIAL APPLICABILITY

The present invention is applicable to, for example, electromagnetic wave absorbers, electrode materials for capacitors, electrode materials for fuel cells or secondary batteries, gas absorbing materials, filters, heat insulating materials, and catalyst carriers.

### REFERENCE SIGNS LIST

1 -- Magnesium citrate
2 -- Boric acid
3 -- Boron oxide
4 -- Magnesium oxide
6 -- Magnesium citrate that is being decomposed
7 -- Mold
8 -- Porous carbon

## Claims

1. A porous carbon, **characterized by** having a C-B-O bonding structure existing in at least a surface thereof, and having a BET specific surface area of 300 m²/g or greater as determined from a nitrogen adsorption isotherm at 77K.

2. The porous carbon according to claim 1, wherein the micropore volume as determined by a DR method from the nitrogen adsorption isotherm at 77k is 0.3 mL/g or greater.

3. The porous carbon according to claim 1 or 2, wherein the difference between the total pore volume determined from the nitrogen adsorption isotherm at 77K and the micropore volume determined by a DR method from the nitrogen adsorption isotherm at 77k is 1 mL/g or greater.

4. The porous carbon according to any one of claims 1 through 3, wherein the content of boron is from 100 ppm to 10,000 ppm.

5. The porous carbon according to any one of claims 1 through 4, wherein the transmittance is 80% or lower, the transmittance being determined using a light ray having a wavelength of 550 nm after adding 0.03 weight % of the porous carbon to 100 g of ion exchange water, applying an ultrasonic wave of 40 kHz thereto for 3 minutes, and further allowing the ion exchange water containing the porous carbon to stand for 16 hours.

6. A method of manufacturing a porous carbon, comprising the steps of:
mixing a boric acid and a magnesium citrate together, to prepare a mixture;
heat-treating the mixture in a vacuum atmosphere, a non-oxidizing atmosphere, or a reducing atmosphere, to prepare a heat-treated substance; and
removing a template from the heat-treated substance.

7. The method of manufacturing a porous carbon according to claim 6, wherein the proportion of the boric acid to the magnesium citrate is restricted to from greater than 0 weight % to 100 weight %.

8. The method of manufacturing a carbon material according to claim 6 or 7, wherein the temperature in the heat-treating is from 500°C to 1,500°C.
